# FASCICULE DE BREVET EUROPEEN

(11) **EP 2 627 608 B1**
(45) Date de publication et mention de la délivrance du brevet: **21.12.2016**
(21) Numéro de dépôt: 11776562.8
(22) Date de dépôt: 11.10.2011
(51) Int. Cl.: E21B 43/34, C02F 103/36, C02F 101/32, C02F 1/44, C02F 1/40, C02F 1/38, C02F 9/00

(54) **TRAITEMENT DE L'EAU DANS AU MOINS UNE UNITE DE FILTRATION MEMBRANAIRE POUR LA RECUPERATION ASSISTEE D'HYDROCARBURES**
WASSERAUFBEREITUNG IN MINDESTENS EINER MEMBRANFILTRATIONSEINHEIT FÜR ERHÖHTE KOHLENWASSERSTOFFGEWINNUNG
WATER TREATMENT IN AT LEAST ONE MEMBRANE FILTRATION UNIT FOR ENHANCED HYDROCARBON RECOVERY

(30) Priorité: 14.10.2010 FR 1058369
(43) Date de publication de la demande: 21.08.2013
(73) Titulaire: Total S.A., 92400 Courbevoie (FR)
(72) Inventeur: HENG, Samuel, F-64140 Billere (FR); PEDENAUD, Pierre, F-64230 Lescar (FR); COFFIN, Philippe, F-64230 Lescar (FR)
(74) Mandataire: Hirsch & Associés
(86) Numéro de dépôt international: PCT/IB2011/054471
(87) Numéro de publication internationale: WO 2012/049619

(56) Documents cités:
- WO-A1-2007/138327
- WO-A1-2009/012378
- US-A1- 2004 079 706
- US-A1- 2009 050 572
- US-A1- 2009 056 940

## Description

### DOMAINE DE L'INVENTION

La présente invention concerne un procédé de traitement d'eau dans le cadre de la production d'hydrocarbures, et plus particulièrement de la récupération assistée d'hydrocarbures, ainsi qu'une installation adaptée à la mise en oeuvre de ce procédé.

### ARRIERE-PLAN TECHNIQUE

Dans le domaine de la production d'hydrocarbures, après les opérations de récupération d'hydrocarbures au moyen de la pression naturelle de la formation souterraine contenant les hydrocarbures, dite « primaire », on procède généralement à une récupération dite « secondaire » par injection d'eau.

Dans ce contexte, il est généralement nécessaire de traiter deux types de flux aqueux, à savoir une eau prélevée dans l'environnement et qui est destinée à être injectée (au moins initialement) dans la formation souterraine, et une eau de production, qui représente la fraction aqueuse récupérée dans les puits de production. Cette eau de production peut être rejetée dans l'environnement ou, de préférence, peut être réutilisée comme eau d'injection à partir du moment où elle est obtenue en quantité suffisante.

Il est connu du document WO2009/012378A une installation comprenant un puits foré dans une formation souterraine contenant des hydrocarbures, un dispositif de production d'hydrocarbures et d'eau de production, une alimentation en eau, notamment de mer, une installation de production de vapeur et une installation d'injection de vapeur relier au puits foré et à l'installation de production de vapeur. L'installation de production de vapeur comprend un filtre membranaire pour éliminer au moins 80% d'une quantité de cations divalents dans l'alimentation en eau et une résine échangeuse pour éliminer au moins 80% d'une quantité de cations divalents dans un courant d'eau filtrée qui a déjà traversé ledit filtre membranaire.

Ces deux flux aqueux présentent des caractéristiques relativement différentes en ce qui concerne leur teneur en divers contaminants, et notamment en matières solides et en hydrocarbures. Par conséquent, ces flux aqueux sont traités de manière différente, ce qui entraîne une multiplication des équipements qui est particulièrement indésirable dans les environnements encombrés, notamment en mer.

Il existe donc un réel besoin de mettre au point un procédé de traitement d'eau dans le cadre de la récupération assistée d'hydrocarbures qui soit à la fois efficace et plus simple à mettre en oeuvre, en particulier avec un nombre réduit d'équipements.

### RESUME DE L'INVENTION

L'invention concerne en premier lieu un procédé de traitement d'eau, comprenant :
- le prélèvement d'eau dans l'environnement ;
- la filtration de l'eau prélevée dans une unité de filtration membranaire comprenant plusieurs trains de filtration membranaire munis de lignes d'alimentation et un système de distribution adapté à alimenter séparément chaque ligne d'alimentation des trains de filtration;
- l'extraction d'un flux de production d'une formation souterraine contenant des hydrocarbures ;
- la séparation et la collecte d'eau de production issue du flux de production ;
- la filtration de l'eau de production dans ladite unité de filtration membranaire ;
- la collecte d'un flux d'eau traitée issu de ladite unité de filtration membranaire,
ladite eau prélevée et/ou ladite eau de production étant envoyée(s) dans ledit système de distribution préalablement à l'étape de filtration pour alimenter, au choix de l'opérateur, ladite unité avec ladite eau prélevée et/ou ladite eau de production.

Selon un mode de réalisation, le prélèvement d'eau est effectué dans la mer, une rivière, un lac, un aquifère et / ou un effluent d'eau usée.

Selon un mode de réalisation, le procédé comprend en outre la purification du flux d'eau traitée dans une unité de filtration membranaire supplémentaire, et la collecte d'un flux d'eau traitée et purifiée issu de l'unité de filtration membranaire supplémentaire.

Selon un mode de réalisation, le procédé comprend :
- le prétraitement de l'eau de production préalablement à la filtration de celle-ci, ledit prétraitement comprenant de préférence une ou plusieurs étapes choisies parmi une séparation gaz / liquide, une séparation liquide / solide et une séparation eau / hydrocarbures ; et / ou
- le prétraitement de l'eau prélevée préalablement à la filtration de celle-ci, ledit prétraitement comprenant de préférence une ou plusieurs étapes choisies parmi une filtration préliminaire, une désoxygénation, une chlorination, une désulfatation, un traitement biocide et une injection de composés anti-dépôt ou anti-corrosion.

Selon un mode de réalisation, le procédé est mis en oeuvre en mer sur un support flottant ou au fond de la mer.

Selon un mode de réalisation, l'unité de filtration est une unité de filtration tangentielle.

Selon un mode de réalisation, la filtration dans l'unité de filtration comprend :
- l'alimentation en eau d'au moins un module de filtration membranaire ;
- la collecte d'un perméat et la collecte d'un rétentat en sortie du module de filtration membranaire ;
- le prélèvement de matières solides et / ou d'hydrocarbures contenus dans le rétentat, pour fournir un rétentat traité ;
- le recyclage du rétentat traité en entrée du module de filtration membranaire.

L'invention concerne également une installation de traitement d'eau, comprenant :
- des moyens de prélèvement d'eau dans l'environnement ;
- une unité d'extraction d'hydrocarbures contenus dans une formation souterraine ;
- une unité de filtration membranaire ;
- une ligne d'amenée d'eau prélevée, issue des moyens de prélèvement d'eau et alimentant l'unité de filtration membranaire ;
- une ligne d'amenée d'eau de production, alimentée par l'unité d'extraction d'hydrocarbures et alimentant l'unité de filtration membranaire ; et
- une ligne de collecte d'eau traitée, issue de l'unité de filtration membranaire.

Selon un mode de réalisation, l'unité de filtration membranaire est une unité de filtration membranaire tangentielle.

Selon un mode de réalisation, l'installation comprend :
- au moins un module de filtration membranaire ;
- une ligne d'amenée d'eau connectée en entrée du module de filtration membranaire ;
- une ligne de collecte de perméat connectée en sortie des modules de filtration membranaire ;
- des moyens de collecte de rétentat connectés en sortie des modules de filtration membranaire ;
- des moyens de séparation liquide / solide et / ou des moyens de séparation eau / hydrocarbures alimentés par les moyens de collecte de rétentat ;
- une ligne de recyclage de rétentat traité connectée en sortie des moyens de séparation liquide / solide et / ou des moyens de séparation eau / hydrocarbures et alimentant la ligne d'amenée d'eau ;
et les moyens de séparation liquide / solide et / ou les moyens de séparation eau / hydrocarbures comprennent de préférence un hydrocyclone.

L'unité de filtration membranaire comprend une pluralité de trains de filtration membranaire, chaque train de filtration membranaire comprenant une pompe d'alimentation et un ou plusieurs circuits qui comprennent chacun un ou plusieurs modules de filtration membranaire ; et un système de distribution, alimenté par la ligne d'amenée d'eau prélevée et la ligne d'amenée d'eau de production et alimentant les trains de filtration membranaire.

Selon un mode de réalisation, l'unité de filtration membranaire comporte des filtres membranaires inorganiques ou des filtres membranaires organiques ou des filtres membranaires hybrides, de préférence des filtres membranaires inorganiques sont en céramique à base de Al₂O₂, TiO₂, ZrO₂, SiO₂, MgO, SiC ou un mélange de ceux-ci et de manière plus particulièrement préférée des filtres membranaires en céramique à base de SiC.

Selon un mode de réalisation, l'installation comprend :
- une unité de filtration membranaire supplémentaire, alimentée par la ligne de collecte d'eau traitée ;
- une ligne de collecte d'eau traitée et purifié connectée en sortie de l'unité de filtration membranaire supplémentaire.

Selon un mode de réalisation, l'installation comprend :
- une unité de prétraitement située sur la ligne d'amenée d'eau de production, et comprenant de préférence un ou plusieurs systèmes de séparation choisis parmi les systèmes de séparation gaz / liquide, de séparation liquide / solide et de séparation eau / hydrocarbures ; et / ou
- une unité de prétraitement située sur la ligne d'amenée d'eau prélevée, et comprenant de préférence un ou plusieurs équipements choisis parmi un système de filtration préliminaire, un système de désoxygénation, un système de chlorination, un système de désulfatation, un système de traitement biocide et un système d'injection de composés anti-dépôt ou anti-corrosion.

Selon un mode de réalisation, l'installation est disposée sur un support flottant en mer ou sur le fond marin.

L'invention concerne également un procédé de production d'hydrocarbures comprenant :
- un traitement d'eau selon le procédé décrit ci-dessus ;
- éventuellement l'ajout d'un ou plusieurs additifs dans l'eau traitée, et le cas échéant purifiée ;
- l'injection de l'eau traitée, et le cas échéant purifiée, dans la formation souterraine ;
- la récupération d'un flux d'hydrocarbures issu du flux de production.

La présente invention permet de surmonter les inconvénients de l'état de la technique. Elle fournit plus particulièrement un procédé de traitement d'eau (et une installation correspondante) qui est à la fois efficace et plus simple à mettre en oeuvre que les procédés utilisés dans l'état de la technique. En particulier, l'invention peut être mise en oeuvre avec un nombre réduit d'équipements et avec un meilleur taux d'utilisation des équipements.

Ceci est accompli grâce à un traitement commun de l'eau prélevée dans l'environnement et de l'eau de production, en utilisant un même équipement, à savoir une même unité de filtration membranaire.

Selon certains modes de réalisation particuliers, l'invention présente également une ou de préférence plusieurs des caractéristiques avantageuses énumérées ci-dessous.
- L'invention permet un traitement polyvalent. En utilisant un même équipement, on peut soit traiter uniquement de l'eau prélevée dans l'environnement (notamment au stade initial de l'exploitation de la formation souterraine), soit traiter uniquement de l'eau de production (si celle-ci est récoltée en quantité suffisante, après le stade initial de l'exploitation de la formation souterraine), soit encore traiter simultanément de l'eau de production et de l'eau prélevée dans l'environnement (fournissant un appoint pour l'injection).
- L'invention permet, si on le souhaite, d'obtenir une très bonne qualité d'eau d'injection, permettant non seulement une injection dans la formation souterraine en mode fracturé, mais également éventuellement en mode matriciel. Elle permet également un rejet d'eau dans l'environnement.
- L'invention permet d'obtenir une qualité d'eau constante quelles que soient les variations d'alimentation, et notamment les variations de débit en entrée.
- La filtration membranaire est simple à contrôler. Aucun gaz n'est généré, ce qui est compatible avec une utilisation sous-marine.

### BREVE DESCRIPTION DES FIGURES

La **figure 1** représente de manière schématique un mode de réalisation de l'installation selon l'invention.
La **figure 2** représente de manière schématique un mode de réalisation de l'unité de filtration membranaire utilisée dans l'invention.
La **figure 3** représente de manière schématique un mode de réalisation d'un circuit présent dans l'unité de filtration membranaire utilisée dans l'invention.

### DESCRIPTION DE MODES DE REALISATION DE L'INVENTION

L'invention est maintenant décrite plus en détail et de façon non limitative dans la description qui suit.

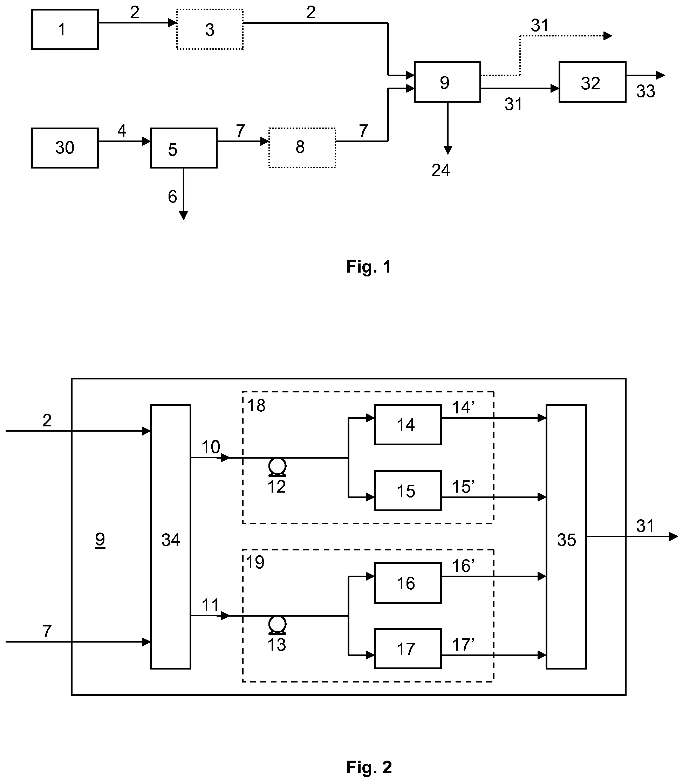

En faisant référence à la **figure 1****,** l'installation selon l'invention comprend une unité de filtration membranaire 9 unique, qui est alimentée ou susceptible d'être alimentée par deux flux d'eau distincts, à savoir de l'eau prélevée dans l'environnement et de l'eau de production, et ce au moyen respectivement d'une ligne d'amenée d'eau prélevée 2 et d'une ligne d'amenée d'eau de production 7.

L'eau de production désigne une eau qui est issue d'un flux de production, c'est-à-dire un flux issu d'une formation souterraine contenant des hydrocarbures. Plus précisément, une unité d'extraction d'hydrocarbures 30, comprenant un ou plusieurs puits d'extraction situés dans la formation souterraine, fournit un flux de production dans une ligne d'amenée de flux de production 4.

Le flux de production est un mélange d'hydrocarbures, d'eau et éventuellement de particules solides et / ou de gaz. Ce flux de production est séparé en plusieurs fractions dans une unité de séparation 5 alimentée par la ligne d'amenée de flux de production 4. En particulier, au moins une fraction hydrocarbonée est récupérée dans une ligne de collecte d'hydrocarbures 6, et une fraction aqueuse (l'eau de production) est soutirée dans la ligne d'amenée d'eau de production 7.

L'eau de production peut subir un traitement préliminaire avant la filtration dans l'unité de filtration membranaire 9, si cela est nécessaire compte tenu de la nature et de la qualité de l'eau de production, et compte tenu des spécifications souhaitées pour l'eau traitée. Dans ce cas, on prévoit une unité de prétraitement 8 sur la ligne d'amenée d'eau de production 7. Cette unité de prétraitement 8 peut par exemple comprendre un ou plusieurs systèmes de séparation choisis parmi les systèmes de séparation gaz / liquide, de séparation liquide / solide et de séparation eau / hydrocarbures, qui peuvent notamment comprendre un ou plusieurs hydrocyclones, ou un ou plusieurs appareils de séparation gravitaire.

L'unité de prétraitement 8, lorsqu'elle est présente, poursuit et affine la séparation entre l'eau, les hydrocarbures, les solides et les gaz du flux de production qui a été entamée dans l'unité de séparation 5.

Selon un mode de réalisation, on ne prévoit au contraire aucun prétraitement de l'eau de production, le traitement de l'eau de production étant directement effectué dans l'unité de filtration membranaire 9 pour plus de simplicité.

L'eau prélevée dans l'environnement est obtenue grâce à des moyens de prélèvement 1. Le terme « environnement » désigne non seulement l'environnement naturel (l'eau pouvant être par exemple prélevée dans les cours d'eau ou les étendues d'eau de surface, notamment rivières, lacs et mer, ou bien encore pouvant être prélevée dans une formation aquifère souterraine), mais également les sources non naturelles d'eau, tels que les effluents industriels ou domestiques (eaux usées, eaux d'égout et autres). De manière générale, l'eau prélevée peut provenir de n'importe quelle source d'eau à l'exception de la formation souterraine contenant les hydrocarbures. Elle est, en d'autres termes, distincte de l'eau de production.

Selon un mode de réalisation, l'invention est mise en oeuvre en mer, et l'eau est prélevée dans la mer.

Les moyens de prélèvement 1 peuvent comprendre des moyens d'extraction et de pompage.

L'eau prélevée peut subir un traitement préliminaire avant la filtration dans l'unité de filtration membranaire 9, si cela est nécessaire compte tenu de la nature et de la qualité de l'eau prélevée, et compte tenu des spécifications souhaitées pour l'eau traitée. Dans ce cas, on prévoit une unité de prétraitement 3 sur la ligne d'amenée d'eau prélevée 2. Cette unité de prétraitement 3 peut par exemple comprendre un système de filtration préliminaire ; et / ou un système de désoxygénation ; et / ou un système de chlorination ; et / ou un système de désulfatation ; et / ou un système de traitement biocide ; et / ou un système d'injection de composés anti-dépôt / anti-corrosion.

Ainsi, l'eau prélevée est prétraitée, et notamment selon les cas filtrée de façon préliminaire ; et / ou désoxygénée ; et / ou chlorinée ; et / ou désulfatée ; et / ou traitée par un agent biocide ; et / ou additionnée de composés anti-dépôt ou anti-corrosion.

La filtration préliminaire en question est une filtration grossière au moyen d'un ou plusieurs filtres présentant une taille de pores supérieure à 5 µm, et en général supérieure à 10 µm, supérieure à 100 µm voire supérieure à 1 mm.

Selon un mode de réalisation, on ne prévoit au contraire aucun prétraitement de l'eau prélevée, le traitement de l'eau prélevée étant directement effectué dans l'unité de filtration membranaire 9 pour plus de simplicité.

L'eau de production et / ou l'eau prélevée sont traitées dans l'unité de filtration membranaire 9. L'eau traitée est récupérée dans au moins une ligne de collecte d'eau traitée 31 connectée en sortie de l'unité de filtration membranaire 9, tandis qu'un rétentat est récupéré dans une ligne de collecte de rétentat 24, et recyclé si la filtration membranaire est de type tangentiel. L'eau traitée récupérée dans la ligne de collecte d'eau traitée 31 est de préférence utilisée pour être injectée dans la formation souterraine, dans un ou plusieurs puits d'injection. Il est possible d'ajouter un ou des additifs à l'eau traitée (par exemple tensioactifs ou polymères destinés à augmenter la viscosité de l'eau), afin d'augmenter l'efficacité du balayage de la formation souterraine par l'eau injectée.

En faisant référence à la **figure 2****,** l'unité de filtration membranaire 9 comprend au moins un, et en général plusieurs, trains de filtration membranaire 18, 19. Chaque train de filtration membranaire 18, 19 est alimenté par une ligne d'alimentation de train respective 10, 11, pourvue éventuellement d'un système de pompage d'alimentation respectif 12, 13.
Chaque train de filtration membranaire 18, 19 comprend au moins un, et en général plusieurs, circuits 14, 15, 16, 17. Dans l'exemple illustré, un premier train de filtration membranaire 18 comprend deux circuits 14, 15 qui sont tous deux alimentés par une même ligne d'alimentation de train 10. De même, un deuxième train de filtration membranaire 19 comprend deux circuits 16, 17 qui sont tous deux alimentés par une même ligne d'alimentation de train 11.

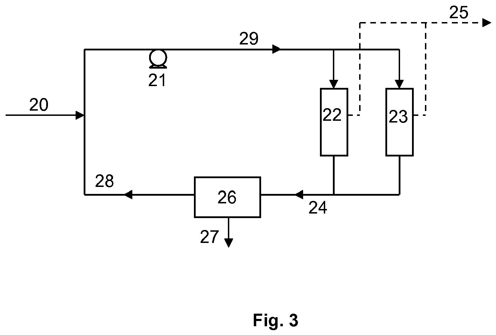

Chaque circuit 14, 15, 16, 17 comprend au moins un, et en général plusieurs, modules de filtration membranaire. En faisant référence à la **figure 3****,** les modules de filtration membranaire 22, 23 peuvent être disposés en série et / ou en parallèle dans le circuit. On désigne par « module de filtration membranaire » un élément individuel de filtration membranaire, comprenant un filtre membranaire. Chaque module de filtration membranaire fournit un perméat (ou filtrat) et un rétentat.

En revenant à la **figure 2****,** des lignes individuelles de collecte d'eau traitée 14', 15', 16', 17' sont connectées en sortie des circuits respectifs 14, 15, 16, 17.

L'unité de filtration membranaire 9 présente donc une structure modulaire et peut fonctionner de façon polyvalente, aussi bien en entrée qu'en sortie.

En ce qui concerne l'entrée, l'unité de filtration membranaire 9 comprend avantageusement un système de distribution 34 auquel sont connectées : en entrée la ligne d'amenée d'eau prélevée 2 et la ligne d'amenée d'eau de production 7 ; et en sortie les lignes d'alimentation de train 10, 11. Le système de distribution 34 est adapté à alimenter séparément chaque ligne d'alimentation de train 10, 11 soit avec de l'eau prélevée, soit avec de l'eau de production, soit avec un mélange d'eau prélevée et d'eau de production, au choix de l'opérateur.

En ce qui concerne la sortie, l'unité de filtration membranaire 9 comprend avantageusement un système de distribution 35 auquel sont connectées : en entrée les lignes individuelles de collecte d'eau traitée 14', 15', 16', 17' ; et en sortie la ligne ou les lignes de collecte d'eau traitée 31.

En début d'exploitation de la formation souterraine, il n'y a pas d'eau de production disponible, et on traite uniquement de l'eau prélevée dans l'unité de filtration membranaire 9. Par la suite, lorsque de l'eau de production est disponible, il est avantageux d'utiliser cette eau de production pour l'injection. Dans ce cas, on traite uniquement l'eau de production dans l'unité de filtration membranaire 9 (on cesse alors de prélever de l'eau dans l'environnement) ; ou bien on traite à la fois de l'eau de production et de l'eau prélevée (assurant un appoint) dans l'unité de filtration membranaire 9, et ce soit dans des modules de filtration membranaires séparés, soit dans les mêmes modules de filtration membranaires (l'eau de production et l'eau prélevée pouvant être mélangées).

Par conséquent, dans le procédé de l'invention, la filtration de l'eau prélevée et la filtration de l'eau de production dans l'unité de séparation membranaire 9 peuvent être effectuées successivement ou simultanément, selon les périodes d'exploitation.

En cas d'excès d'eau de production selon les besoins vis-à-vis de l'injection (et notamment en cas de diminution ou d'interruption ou d'arrêt de l'injection), il est possible de rejeter tout ou partie de l'eau traitée dans l'environnement au lieu de l'injecter dans la formation souterraine.

Les filtres membranaires présents dans l'unité de filtration membranaire 9 peuvent être des filtres membranaires organiques (en polymère) ou inorganiques (en céramique) ou hybrides (en partie en inorganique et en partie en polymère). Le choix des filtres membranaires est effectué de telle sorte que ceux-ci puissent traiter à la fois de l'eau prélevée et de l'eau de production, en dépit des caractéristiques différentes de ces flux.

De préférence, les filtres membranaires doivent tolérer la présence de composés hydrocarbonés et notamment de composés aromatiques tels que le toluène et le benzène, qui peuvent être présents dans l'eau de production.

De préférence, les filtres membranaires doivent pouvoir supporter une température supérieure ou égale à 40°C, notamment supérieure ou égale à 50°C, notamment supérieure ou égale à 60°C, notamment supérieure ou égale à 70°C, notamment supérieure ou égale à 80°C, voire supérieure ou égale à 90°C, puisque l'eau de production peut atteindre ou dépasser de tels seuils de température.

Pour l'ensemble de ces raisons, il est préférable d'utiliser des filtres membranaires en céramique (qui peuvent notamment supporter une teneur en hydrocarbures allant jusqu'à 1 voire 3 % ainsi qu'une température supérieur à 100°C), et notamment des filtres membranaires à base de Al₂O₂, TiO₂, ZrO₂, SiO₂, MgO, SiC ou un mélange de ces derniers. Les filtres membranaires à base de SiC sont particulièrement préférés du fait de leur grande hydrophilie et leur résistance à l'abrasion: ils permettent d'obtenir un flux de perméat plus élevé et sont plus faciles à nettoyer.

Certains filtres membranaires organiques, notamment ceux à base du matériau connu sous le nom de Téflon®, peuvent également convenir, selon les applications.

Selon un mode de réalisation, tous les trains de filtration 18, 19 de l'unité de filtration membranaire 9 sont identiques ; et / ou tous les circuits 14, 15, 16, 17 des trains de filtration 18, 19 sont identiques; et / ou tous les modules de filtration membranaire 22, 23 et tous les filtres membranaires sont identiques.

Alternativement les trains de filtration 18, 19 de l'unité de filtration membranaire 9 peuvent être différents.

L'unité de filtration membranaire 9 peut être une unité de filtration frontale ou tangentielle. La filtration membranaire frontale est plus économique, tandis que la filtration membranaire tangentielle permet de réduire le colmatage des filtres et donc de réduire la fréquence de la maintenance nécessaire (ou d'accroître la durée de vie de l'unité).

L'unité de filtration membranaire 9 est de préférence une unité de microfiltration ou d'ultrafiltration, c'est-à-dire que les filtres membranaires qu'elle contient présentent une taille de pores de 0,01 à 10 µm, et de préférence de 0,01 à 1 µm. Ainsi, l'unité de filtration membranaire 9 est adaptée pour éliminer les gouttes d'hydrocarbures ainsi que les matières solides en suspension dans l'eau.

A titre d'exemple, l'eau en entrée de l'unité de filtration membranaire 9 peut contenir jusqu'à 1000 ppm d'hydrocarbures et jusqu'à 200 mg/L de matières solides en suspension. L'eau traitée en sortie de l'unité de filtration membranaire 9 peut contenir moins de 10 ppm (de préférence moins de 5 ppm voire moins de 1 ppm) d'hydrocarbures et moins de 10 mg/l (de préférence moins de 1 mg/l) de matières solides en suspension : elle est ainsi adaptée à l'injection (y compris en mode matriciel) ou au rejet dans l'environnement.

Si l'on souhaite obtenir une pureté d'eau encore supérieure, et notamment éliminer les sels dissous, on prévoit une unité de filtration membranaire supplémentaire 32 alimentée par la ligne de collecte d'eau traitée 31. Cette unité de filtration membranaire supplémentaire 32 est de préférence une unité de nanofiltration ou d'osmose inverse (comprenant des filtres membranaires présentant une taille de pores inférieure à 0,01 µm). De l'eau traitée et purifiée est alors récupérée dans une ligne de collecte d'eau traitée et purifiée 33 connectée en sortie de l'unité de filtration membranaire supplémentaire 32.

Des moyens de traitement complémentaire peuvent également être prévus selon les besoins, par exemple une unité de désoxygénation de l'eau entre l'unité de filtration membranaire 9 et l'unité de filtration membranaire supplémentaire 32 (dans ce cas il est inutile de prévoir une désoxygénation en amont de l'unité de filtration membranaire 9).

Il peut être avantageux de chauffer l'eau en entrée de l'unité de filtration membranaire 9, afin de diminuer sa viscosité et de réduire les risques de colmatage des filtres membranaires par les hydrocarbures. Pour ce faire, on prévoit un échangeur de chaleur sur la ligne d'amenée d'eau prélevée 2 et / ou sur la ligne d'amenée d'eau de production 7 et / ou sur les lignes d'alimentation de train 10, 11.

L'échangeur de chaleur peut par exemple être couplé avec la ou les conduites de collecte d'eau traitée 31 ou bien avec les lignes individuelles de collecte d'eau traitée 14', 15', 16', 17', afin de récupérer les calories de l'eau traitée (qui peut être typiquement à une température de 30 à 90°C).

L'invention peut être mise en oeuvre sur terre ou en mer. La mise en oeuvre en mer peut être sur un support flottant ou une plateforme, ou encore sur le fond marin, en utilisant des équipements adaptés (marinisation des équipements).

### Variante

Dans le cas d'une filtration tangentielle, une variante de l'invention prévoit de coupler la filtration membranaire à une purification du rétentat en continu dans la boucle de filtration ou de manière discontinue lorsque cela est nécessaire à une séparation.

Plus précisément, et en faisant référence à la **figure 3****,** un circuit de l'unité de filtration membranaire 9 comprend une ligne d'amenée d'eau 29, sur laquelle est disposée une pompe de circulation 21. La ligne d'amenée d'eau 29 débouche dans un ou plusieurs modules de filtration membranaire 22, 23. Dans le mode de réalisation illustré, deux modules de filtration membranaire 22, 23 disposés en parallèle sont prévus.

En sortie des modules de filtration membranaire 22, 23 est connectée une ligne de collecte de perméat 25. Cette ligne de collecte de perméat 25 correspond à une ligne individuelle de collecte d'eau traitée 14', 15', 16', 17' décrite ci-dessus en relation avec la **figure 2****.**

Egalement en sortie des modules de filtration membranaire 22, 23 sont connectés des moyens de collecte de rétentat 24. Dans le cas illustré, il s'agit d'une ligne de collecte de rétentat.

Les moyens de collecte de rétentat 24 alimentent des moyens de séparation 26 qui peuvent être des moyens de séparation liquide / solide ; ou des moyens de séparation eau / hydrocarbures ; ou encore des moyens de séparation liquide / solide associés à des moyens de séparation eau / hydrocarbures.

Les moyens de séparation 26 peuvent comprendre des moyens de séparation gravitaire du type décanteur ou des moyens de séparation par flottation. Mais de préférence il s'agit d'hydrocyclone(s) de désablage et / ou de déshuilage car ces dispositifs sont relativement compacts.

Il est encore possible d'utiliser un hydrocyclone rotatif, tel que celui décrit dans la demande n° FR 09/59254 du 18 décembre 2009.

Au moins une ligne de collecte de contaminants 27 est connectée en sortie des moyens de séparation 26 ; elle permet de récupérer les matériaux éliminés du rétentat (hydrocarbures et / ou matières solides).

Une ligne de recyclage de rétentat traité 28 est également connectée en sortie des moyens de séparation 26 ; elle permet de récupérer la majorité du rétentat, débarrassé d'une partie de ses contaminants (hydrocarbures et / ou matières solides). La ligne de recyclage de rétentat traité 28 alimente la ligne d'amenée d'eau 29. Une ligne d'alimentation en eau 20 débouche également dans la ligne d'amenée d'eau 29. Elle est issue d'une ligne d'alimentation de train 10, 11 et assure l'alimentation des modules de filtration membranaire 22, 23 par l'eau prélevée et / ou l'eau de production devant être traitée.

La présente variante permet de limiter la quantité de contaminants (hydrocarbures et / ou matières solides) en contact avec les filtres membranaires, et donc de réduire les risques de colmatage et d'augmenter la durée de vie des filtres membranaires, tout en permettant de réduire la quantité de rétentat à traiter. La puissance de la pompe de circulation 21 est adaptée pour tenir compte de la présence des moyens de séparation 26.

Selon un autre mode de réalisation (non illustré), on peut prévoir un séparateur (notamment un hydrocyclone) couplé directement en sortie de chaque module de filtration membranaire 22, 23. Dans ce cas, les moyens de collecte de rétentat 24 sont simplement des moyens de liaison entre les modules de filtration membranaires 22, 23 et les séparateurs respectifs, ce qui assure une intégration compacte optimale des différents équipements.

De manière générale, la séparation des matières solides et / ou des gouttes d'hydrocarbures dans le rétentat est d'autant plus efficace que le débit du rétentat est élevé et que la concentration en matières solides et / ou gouttes d'hydrocarbures y est également élevée (en tout cas plus élevée que dans le flux alimentant l'unité de filtration membranaire) : il s'agit là de conditions particulièrement favorables aux moyens de séparation du type hydrocyclone. Il existe donc un couplage particulièrement efficace entre les membranes de filtration et les moyens de séparation qui leur sont associés.

## Revendications

1. Procédé de traitement d'eau, comprenant :
- le prélèvement d'eau dans l'environnement ;
- la filtration de l'eau prélevée dans une unité de filtration membranaire (9) comprenant plusieurs trains de filtration membranaires (18, 19) munis de lignes d'alimentation (10, 11) et un système de distribution (34) adapté à alimenter séparément chaque ligne d'alimentation (10, 11) des trains de filtration (18, 19);
- l'extraction d'un flux de production d'une formation souterraine contenant des hydrocarbures ;
- la séparation et la collecte d'eau de production issue du flux de production ;
- la filtration de l'eau de production dans ladite unité de filtration membranaire (9);
- la collecte d'un flux d'eau traitée issu de ladite unité de filtration membranaire (9),
ladite eau prélevée et/ou ladite eau de production étant envoyée(s) dans ledit système de distribution (34) préalablement à l'étape de filtration pour alimenter, au choix de l'opérateur, ladite unité (9) avec ladite eau prélevée et/ou ladite eau de production.

2. Procédé selon la revendication 1, dans lequel le prélèvement d'eau est effectué dans la mer, une rivière, un lac, un aquifère et / ou un effluent d'eau usée.

3. Procédé selon la revendication 1 ou 2, comprenant en outre la purification du flux d'eau traitée dans une unité de filtration membranaire supplémentaire (32), et la collecte d'un flux d'eau traitée et purifiée issu de l'unité de filtration membranaire supplémentaire (32).

4. Procédé selon l'une des revendications 1 à 3, comprenant :
- le prétraitement de l'eau de production préalablement à la filtration de celle-ci, ledit prétraitement comprenant de préférence une ou plusieurs étapes choisies parmi une séparation gaz / liquide, une séparation liquide / solide et une séparation eau / hydrocarbures ; et / ou
- le prétraitement de l'eau prélevée préalablement à la filtration de celle-ci, ledit prétraitement comprenant de préférence une ou plusieurs étapes choisies parmi une filtration préliminaire, une désoxygénation, une chlorination, une désulfatation, un traitement biocide et une injection de composés anti-dépôt ou anti-corrosion.

5. Procédé selon l'une des revendications 1 à 4, qui est mis en oeuvre en mer sur un support flottant ou au fond de la mer.

6. Procédé selon l'une des revendications 1 à 5, dans lequel l'unité de filtration (9) est une unité de filtration tangentielle.

7. Procédé selon la revendication 6, dans lequel la filtration dans l'unité de filtration (9) comprend :
- l'alimentation en eau d'au moins un module de filtration membranaire (22, 23);
- la collecte d'un perméat et la collecte d'un rétentat en sortie du module de filtration membranaire (22, 23);
- le prélèvement de matières solides et / ou d'hydrocarbures contenus dans le rétentat, pour fournir un rétentat traité ;
- le recyclage du rétentat traité en entrée du module de filtration membranaire (22, 23).

8. Installation de traitement d'eau, comprenant :
- des moyens de prélèvement d'eau (1) dans l'environnement ;
- une unité d'extraction d'hydrocarbures (30) contenus dans une formation souterraine ;
- une unité de filtration membranaire (9) comprenant une pluralité de trains de filtration membranaire (18, 19), chaque train de filtration membranaire (18, 19) comprenant une pompe d'alimentation (12, 13) et un ou plusieurs circuits (14, 15, 16, 17) qui comprennent chacun un ou plusieurs modules de filtration membranaire ; et un système de distribution (34), alimenté par la ligne d'amenée d'eau prélevée (2) et la ligne d'amenée d'eau de production (7) et alimentant les trains de filtration membranaire (18, 19), ledit système de distribution (34) étant adapté à alimenter séparément chaque ligne d'alimentation de train (10, 11) au choix de l'opérateur avec de l'eau prélevée et/ou de l'eau de production;
- une ligne d'amenée d'eau prélevée (2), issue des moyens de prélèvement d'eau (1) et alimentant l'unité de filtration membranaire (9) ;
- une ligne d'amenée d'eau de production (7), alimentée par l'unité d'extraction d'hydrocarbures (30) et alimentant l'unité de filtration membranaire (9) ; et
- une ligne de collecte d'eau traitée (31), issue de l'unité de filtration membranaire (9).

9. Installation selon la revendication 8, dans laquelle l'unité de filtration membranaire (9) est une unité de filtration membranaire tangentielle.

10. Installation selon la revendication 9, comprenant :
- au moins un module de filtration membranaire (22, 23);
- une ligne d'amenée d'eau (29) connectée en entrée du module de filtration membranaire (22, 23) ;
- une ligne de collecte de perméat (25) connectée en sortie des modules de filtration membranaire (22, 23) ;
- des moyens de collecte de rétentat (24) connectés en sortie des modules de filtration membranaire (22, 23) ;
- des moyens de séparation (26) liquide / solide et / ou des moyens de séparation (26) eau / hydrocarbures alimentés par les moyens de collecte de rétentat (24) ;
- une ligne de recyclage de rétentat traité (28) connectée en sortie des moyens de séparation (26) liquide / solide et / ou des moyens de séparation (26) eau / hydrocarbures et alimentant la ligne d'amenée d'eau (29) ;
dans laquelle les moyens de séparation (26) liquide / solide et / ou les moyens de séparation (26) eau / hydrocarbures comprennent de préférence un hydrocyclone.

11. Installation selon l'une des revendications 8 à 10, dans laquelle l'unité de filtration membranaire (9) comporte des filtres membranaires inorganiques ou des filtres membranaires organiques ou des filtres membranaires hybrides, de préférence des filtres membranaires inorganiques sont en céramique à base de Al₂O₂, TiO₂, ZrO₂, SiO₂, MgO, SiC ou un mélange de ceux-ci et de manière plus particulièrement préférée des filtres membranaires en céramique à base de SiC.

12. Installation selon l'une des revendications 8 à 11, comprenant :
- une unité de filtration membranaire supplémentaire (32), alimentée par la ligne de collecte d'eau traitée (31) ;
- une ligne de collecte d'eau traitée et purifiée (33) connectée en sortie de l'unité de filtration membranaire supplémentaire (32).

13. Installation selon l'une des revendications 8 à 12, comprenant :
- une unité de prétraitement (8) située sur la ligne d'amenée d'eau de production (7), et comprenant de préférence un ou plusieurs systèmes de séparation choisis parmi les systèmes de séparation gaz / liquide, de séparation liquide / solide et de séparation eau / hydrocarbures ; et / ou
- une unité de prétraitement (3) située sur la ligne d'amenée d'eau prélevée (2), et comprenant de préférence un ou plusieurs équipements choisis parmi un système de filtration préliminaire, un système de désoxygénation, un système de chlorination, un système de désulfatation, un système de traitement biocide et un système d'injection de composés anti-dépôt ou anti-corrosion.

14. Installation selon l'une des revendications 8 à 13, disposée sur un support flottant en mer ou sur le fond marin.

15. Procédé de production d'hydrocarbures comprenant :
- un traitement d'eau selon le procédé des revendications 1 à 7;
- éventuellement l'ajout d'un ou plusieurs additifs dans l'eau traitée, et le cas échéant purifiée ;
- l'injection de l'eau traitée, et le cas échéant purifiée, dans la formation souterraine ;
- la récupération d'un flux d'hydrocarbures issu du flux de production.

## Patentansprüche

1. Wasserbehandlungsverfahrens, umfassend:
- die Entnahme von Wasser aus der Umgebung;
- die Filterung des entnommenen Wassers in einer Membranfiltereinheit (9), umfassend mehrere Membranfilterstraßen (18, 19), die mit Versorgungsleitungen (10, 11) versehen sind, und ein Verteilungssystem (34), das dazu vorgesehen ist, jede Versorgungsleitung (10, 11) der Filterstraßen (18, 19) separat zu versorgen;
- die Extraktion einer unterirdischen Formation, die Kohlenwasserstoffe enthält, aus einem Produktionsstrom;
- die Abscheidung und das Auffangen von Produktions-wasser, das aus dem Produktionsstrom stammt;
- das Filtern des Produktionswassers in der Membranfiltereinheit(9);
- das Auffangen eines aufbereiteten Wasserstroms, der von der Membranfiltereinheit (9) stammt;
wobei das entnommene Wasser und/oder das Produktionswasser in das Verteilungssystem (34) vor dem Filterschritt geschickt wird(werden), um nach Wahl des Bedieners die Einheit (9) mit dem entnommenen Wasser und/oder dem Produktionswasser zu versorgen.

2. Verfahren nach Anspruch 1, bei dem die Entnahme von Wasser im Meer, in einem Fluss, einem See, in Grundwasser und/oder einem Abwasserstrom erfolgt.

3. Verfahren nach Anspruch 1 oder 2, ferner umfassend die Reinigung des aufbereiteten Wasserstroms in einer zusätzlichen Membranfiltereinheit (32) und das Auffangen eines aufbereiteten und gereinigten Wasserstroms, der aus der zusätzlichen Membranfiltereinheit (32) stammt.

4. Verfahren nach einem der Ansprüche 1 bis 3, umfassend:
- die Vorbehandlung des Produktionswassers vor der Filterung desselben, wobei die Vorbehandlung einen oder mehrere Schritte umfasst, die unter einer Gas-/Flüssig-Abscheidung, einer Flüssig-/Fest-Abscheidung und einer Wasser-/Kohlenwasserstoff-Abscheidung ausgewählt sind; und/oder
- die Vorbehandlung des entnommenen Wassers vor der Filterung desselben, wobei die Vorbehandlung vorzugsweise einen oder mehrere Schritte umfasst, die unter einer Vorfilterung, einem Deoxidieren, einem Chlorieren, einer Entschwefelung, einer Biozid-Behandlungs und einer Injektion von Ablagerung oder Korrosion verhindernden Verbindungen ausgewählt sind.

5. Verfahren nach einem der Ansprüche 1 bis 4, das im Meer auf einem schwimmenden Träger oder am Boden des Meers eingesetzt wird.

6. Verfahren nach einem der Ansprüche 1 bis 5, bei dem die Filtereinheit (9) eine Tangentialfiltereinheit ist.

7. Verfahren nach Anspruch 6, bei dem die Filterung in der Filtereinheit (9) umfasst:
- die Versorgung mindestens eines Membranfiltermoduls (22, 23) mit Wasser,
- das Auffangen eines Permeats und das Auffangen eines Retentats am Ausgang des Membranfiltermoduls (22, 23);
- die Entnahme von Feststoffen und/oder Kohlenwasserstoffen, die in dem Retentat enthalten sind, um ein aufbereitetes Retentat zu liefern;
- die Rezyklierung des aufbereiteten Retentats am Eingang des Membranfiltermoduls (22, 23).

8. Wasserbehandlungsanlage, umfassend:
- Mittel zur Entnahme von Wasser (1) aus der Umgebung;
- eine Einheit zur Extraktion von Kohlenwasserstoffen (30), die in einer unterirdischen Formation enthalten sind;
- ein Membranfiltereinheit (9), umfassend eine Vielzahl von Membranfilterstraßen (18, 19), wobei jede Membranfilter-straße (18, 19) eine Versorgungspumpe (12, 13) und eine oder mehrere Kreise (14, 15, 16, 17) umfasst, die jeweils ein oder mehrere Membranfiltermodule umfassen; und ein Verteilungssystem (34), das von der Zuleitung von entnommenem Wasser (2) und der Zuleitung von Produktionswasser (7) versorgt wird und die Membran-filterstraßen (18, 19) versorgt, wobei das Verteilungssystem (34) dazu vorgesehen ist, jede Versorgungsleitung einer Straße (10, 11) nach Wahl des Bedieners mit entnommenem Wasser und/oder Produktions-wasser zu versorgen;
- eine Zuleitung von entnommenem Wasser (2), das von den Mittel zur Wasserentnahme (1) stammt, die die Membranfiltereinheit (9) versorgt;
- eine Zuleitung von Produktionswasser (7), die von der Einheit zur Extraktion von Kohlenwasserstoffen (30) versorgt wird und die Membranfiltereinheit (9) versorgt; und
- eine Leitung zum Auffangen von aufbereitetem Wasser (31), das von der Membranfiltereinheit (9) stammt.

9. Anlage nach Anspruch 8, bei der die Membranfiltereinheit (9) eine Tangential-Membranfiltereinheit ist.

10. Anlage nach Anspruch 9, umfassend:
- mindestens ein Membranfiltermodul (22, 23);
- eine Wasserzuleitung (29), die an den Eingang des Membranfiltermoduls (22, 23) angeschlossen ist;
- eine Permeat-Auffangleitung (25), die an den Ausgang der Membranfiltermodule (22, 23) angeschlossen ist;
- Retentat-Auffangmittel (24), die an den Ausgang der Membranfiltermodule (22, 23) angeschlossen sind;
- Mittel (26) zur Fest-/Flüssig-Abscheidung, und/oder Mittel (26) zur Wasser-/Kohlenwasserstoff-Abscheidung, die von den Retentat-Sammelmitteln (24) versorgt werden;
- eine Leitung zum Rezyklieren von aufbereitetem Retentat (28), die an den Ausgang der Mittel (26) zur Fest-/Flüssig-Abscheidung, und/oder der Mittel (26) zur Wasser-/Kohlenwasserstoff Abscheidung angeschlossen ist und die Wasserzuleitung (29) versorgt,
bei der die Mittel (26) zur Fest-/Flüssig-Abscheidung, und/oder die Mittel (26) zur Wasser-/Kohlenwasserstoff-Abscheidung vorzugsweise einen Hydrozyklon umfassen.

11. Anlage nach einem der Ansprüche 8 bis 10, bei der die Membranfiltereinheit (9) anorganische Membranfilter oder organische Membranfilter oder Hybrid-Membranfilter umfasst, vorzugsweise anorganische Membranfilter aus Keramik auf Basis von Al₂O₂, TiO₂, ZrO₂, SiO₂, MgO, SiC oder einem Gemisch derselben, und auf noch bevorzugtere Weise Membranfilter aus Keramik auf Basis von SiC.

12. Anlage nach einem der Ansprüche 8 bis 11, umfassend:
- eine zusätzliche Membranfiltereinheit (32), die von der Auffangleitung von aufbereitetem Wasser (31) versorgt wird;
- eine Auffangleitung von aufbereitetem und gereinigtem Wasser (33), die an den Ausgang der zusätzlichen Membranfiltereinheit (32) angeschlossen ist.

13. Anlage nach einem der Ansprüche 8 bis 12, umfassend:
- eine Vorbehandlungseinheit (8), die sich auf der Zuleitung von Produktionswasser (7) befindet und vorzugsweise ein oder mehrere Abscheidungssysteme umfasst, die ausgewählt sind unter den Gas-/Flüssig-, Flüssig-/Fest- und Wasser-/Kohlenwasserstoff-Abscheidungssystemen; und/oder
- eine Vorbehandlungseinheit (3), die sich auf der Zuleitung von entnommenem Wasser (2) befindet und vorzugsweise eine oder mehrere Ausrüstungen umfasst, die unter einem Vorfiltersystem, einem Deoxidierungssystem, einem Chlorierungssystem, einem Entschwefelungssystem, einen Biozid-Behandlungsssystem und einem Injektionssystem von Ablagerung und Korrosion verhindernden Verbindungen ausgewählt ist.

14. Anlage nach einem der Ansprüche 8 bis 13, die auf einem im Meer schwimmenden Träger oder auf dem Meeresboden angeordnet ist.

15. Verfahren zur Erzeugung von Kohlenwasserstoffen, umfassend:
- eine Wasserbehandlungs nach dem Verfahren der Ansprüche 1 bis 7;
- eventuell die Beigabe von einem oder mehreren Zusatzstoffen zu dem aufbereiteten und gegebenenfalls gereinigten Wasser;
- das Einspritzen des aufbereiteten und gegebenenfalls gereinigten Wassers in die unterirdische Formation;
- die Wiedergewinnung eines Kohlenwasserstoffstroms, der aus dem Produktionsstrom stammt.

## Claims

1. A water treatment method, comprising:
- withdrawing water from the environment;
- filtering withdrawn water in a membrane filtration unit (9) which comprises a plurality of membrane filtrations trains (18, 19) provided with feed lines (10, 11) and a distribution system (34) adapted to separately feed each feed line (10, 11) of the filtration trains (18, 19);
- extracting a production flow from an underground formation containing hydrocarbons;
- separating and collecting production water from the production flow;
- filtering the production flow in said membrane filtration unit (9);
- collecting a treated water flow from said membrane filtration unit (9), said withdrawn water and/or said production water being sent to said distribution system (34) prior to the filtration step in order to feed, at the choice of the operator, said unit (9) with said withdrawn water and/or said production water.

2. The method according to claim 1, wherein the withdrawal of water is carried out in the sea, a river, a lake, an aquifer and/or a waste water effluent.

3. The method according to claim 1 or 2, further comprising purification of the treated water flow in an additional membrane filtration unit (32), and collection of a treated and purified water flow from the additional membrane filtration unit (32).

4. The method according to one of claims 1 to 3, comprising:
- pre-treating the production water prior to the filtration of the latter, said pre-treatment preferably comprising one or more steps selected from gas/liquid separation, liquid/solid separation and water/hydrocarbons separation; and/or
- pre-treating the withdrawn water prior to the filtration of the latter, said pre-treatment preferably comprising one or more steps selected from preliminary filtration, deoxygenation, chlorination, desulfatation, biocidal treatment and injection of anti-deposition or anti-corrosion compounds.

5. The method according to one of claims 1 to 4, which is applied at sea on a floating support or on the sea bed.

6. The method according to one of claims 1 to 5, wherein the filtration unit (9) is a tangential filtration unit.

7. The method according to claim 6, wherein the filtration in the filtration unit (9) comprises:
- feeding with water at least one membrane filtration module (22, 23),
- collecting a permeate and collecting a retentate at the outlet of the membrane filtration module (22, 23);
- withdrawing solid materials and/or hydrocarbons contained in the retentate, in order to provide a treated retentate;
- recycling the treated retentate at the inlet of the membrane filtration module (22, 23).

8. A water treatment installation, comprising:
- means (1) for withdrawing water from the environment;
- a unit (30) for extracting hydrocarbons contained in an underground formation;
- a membrane filtration unit (9) comprising a plurality of membrane filtration trains (18, 19), each membrane filtration train (18, 19) comprising a feeding pump (12, 13) and one or more circuits (14, 15, 16, 17) which each comprise one or more membrane filtration modules; and a distribution system (34) fed by the withdrawn water admission line (2) and the production water admission line (7) and feeding the membrane filtration trains (18, 19), said distribution system (34) being adapted to separately feed each train feeding line (10, 11) either with withdrawn water and/or with production water, as selected by the operator;
- a line (2) for admitting withdrawn water, stemming from the water withdrawing means (1) and feeding the membrane filtration unit (9);
- a line (7) for admitting production water, fed by the hydrocarbon extraction unit (30) and feeding the membrane filtration unit (9); and
- a line (31) for collecting treated water, stemming from the membrane filtration unit (9).

9. The installation according to claim 8, wherein the membrane filtration unit (9) is a tangential membrane filtration unit.

10. The installation according to claim 9, comprising:
- at least one membrane filtration module (22, 23);
- a line (29) for admission of water connected at the inlet of the membrane filtration module (22, 23);
- a line (25) for collecting permeate connected at the outlet of the membrane filtration modules (22, 23);
- means (24) for collecting retentate connected at the outlet of the membrane filtration modules (22, 23);
- liquid/solid separation means (26) and/or water/hydrocarbon separation means (26) fed by the retentate collecting means (24);
- a line (28) for recycling treated retentate connected at the outlet of the liquid/solid separation means (26) and/or water/hydrocarbons separation means (26) and feeding the water admission line (29); wherein the liquid/solid separation means (26) and/or water/hydrocarbons separation means (26) preferably comprise a hydrocyclone.

11. The installation according to one of claims 8 to 10, wherein the membrane filtration unit (9) includes inorganic membrane filters or organic membrane filters or hybrid membrane filters; preferably inorganic membrane filters are in ceramic based on Al₂O₂, TiO₂, ZrO₂, SiO₂, MgO, SiC or a mixture thereof and more preferably membrane filters in ceramic based on SiC.

12. The installation according to one of claims 8 to 11, comprising:
- an additional membrane filtration unit (32), fed by the treated water collecting line (31);
- a line (33) for collecting treated and purified water, connected at the outlet of the additional membrane filtration unit (32).

13. The installation according to one of claims 8 to 12, comprising:
- a pre-treatment unit (8) located on the production water admission line (7), and preferably comprising one or more separation systems selected from gas/liquid separation systems, liquid/solid separation systems and water/hydrocarbons separation systems; and/or
- a pre-treatment unit (3) located on the withdrawn water admission line (2), and preferably comprising one or more pieces of equipment selected from a preliminary filtration system, a deoxygenation system, a chlorination system, a desulfatation system, a biocidal treatment system and a system for injecting anti-deposition or anti-corrosion compounds.

14. The installation according to one of claims 8 to 13, positioned on a floating support at sea or on the sea bed.

15. A method for producing hydrocarbons comprising:
- a water treatment according to the method of claims 1 to 7;
- optionally addition of one or more additives in the treated and if necessary purified water;
- injection of the treated and if necessary purified water into the underground formation,
- recovery of a flow of hydrocarbons from the production flow.
